(19) Europäisches Patentamt / European Patent Office / Office européen des brevets

(11) **EP 4 455 086 A1**

(12) # EUROPEAN PATENT APPLICATION

(43) Date of publication:
**30.10.2024   Bulletin 2024/44**

(21) Application number: **23170110.3**

(22) Date of filing: **26.04.2023**

(51) International Patent Classification (IPC):
**C01B 32/05** (2017.01)       **C01B 32/205** (2017.01)
**C04B 11/028** (2006.01)       **C10B 3/00** (2006.01)
**F27B 1/10** (2006.01)

(52) Cooperative Patent Classification (CPC):
**C01B 32/05; C01B 32/205; C04B 11/028;
F27B 1/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **SGL Carbon SE
65201 Wiesbaden (DE)**

(72) Inventors:
• **SCHREINER, Christian
86405 Meitingen (DE)**
• **LOSHER, Richard
86405 Meitingen (DE)**

(54) **GRAPHITIZATION FURNACE COMPRISING AN ASH OUTLET**

(57)    In a first aspect, the present disclosure relates to a graphitization furnace comprising a raw material inlet, a product outlet and a channel 100 connecting the raw material inlet and the product outlet. The graphitization furnace further comprises an ash outlet 110 in gaseous communication with the channel 100, wherein the ash outlet 110 comprises an ash collection chamber 120 comprising a hatch 160 and a high surface area body 130 removably disposed within the ash collection chamber 120, and/or a cooling means 140.

**Figure 1**

## Description

### Technical Field

The present invention relates to the field of graphitization furnaces. More specifically, the present invention relates to graphitization furnaces comprising an ash collection chamber.

### Background

The most common commercially used anode material in lithium-ion batteries is graphite. The graphite can be lithiated to the state of $LiC_6$, which correlates to a theoretical maximal capacity of 372 mAh/g.

Artificial graphite may be produced by heating carbonaceous starting materials, such as coke and/or pitch, to temperatures of about 3000 °C under exclusion of oxygen. The heating may be performed in batch or continuous furnaces. In a continuous furnace a powdery or granulated carbonaceous material may be conveyed along a heated channel between a raw material inlet and a product outlet, transitioning to graphite while being conveyed.

However, the carbonaceous starting materials may still comprise impurities. At the high temperatures of graphitization, these impurities may evaporate or outgas from the carbonaceous material during graphitization as e.g. volatile elements, carbides or oxides. The impurities and the generated volatiles may also be referred to as ash. To attain a high-quality graphite from the graphitization process, the ash needs to be removed from the carbonaceous material and the reaction zone of the furnace. Additionally, the ash needs to be removed from the furnace in a controlled manner to prevent its undesired condensation on parts of the furnace, for example within a flue duct.

Removing the ash from a furnace operating at temperatures of up to above 3000 °C in a practical and energy-efficient manner is challenging. The present disclosure aims to address the aforementioned issues in graphitization furnaces.

### Summary

In a first aspect, the present disclosure relates to a graphitization furnace comprising a raw material inlet, a product outlet and a channel 100 connecting the raw material inlet and the product outlet. The graphitization furnace further comprises an ash outlet 110 in gaseous communication with the channel 100, wherein the ash outlet 110 comprises an ash collection chamber 120 comprising a hatch 160 and a high surface area body 130 removably disposed within the ash collection chamber 120, and/or a cooling means 140.

In some embodiments, the graphitization furnace may be a continuous graphitization furnace, in particular a vertical continuous graphitization furnace.

In some embodiments, the ash outlet may be provided adjacent to and in gaseous communication with the channel.

In some embodiments, the ash outlet may comprise a gas inlet, in particular wherein the gas inlet may be configured to allow gas from the channel to enter into the ash outlet.

In some embodiments, the gas inlet may be disposed at an upstream end of the ash outlet and/or the gas outlet may be disposed at a downstream end of the ash outlet.

In some embodiments, the channel may comprise a channel heating zone, a channel high temperature reaction zone and a channel cooling zone, wherein the ash outlet is in gaseous communication with the channel high temperature reaction zone.

In some embodiments, the graphitization furnace may comprise at least one gas injection port.

In some embodiments, the channel may be provided with at least one gas injection port connected to a purge gas pump and/or pressure regulator, in particular wherein the purge gas pump and/or pressure regulator is/are configured to maintain a pressure above the ambient pressure in the graphitization furnace.

In some embodiments, the at least one gas injection port may be connected to a heat exchanger configured to preheat the injected gas.

In some embodiments, the ash outlet may comprise a gas outlet.

In some embodiments, the high surface area body may be a felt, in particular a carbon or graphite felt.

In some embodiments, the high surface area body may be at least partially encased in a cartridge.

In some embodiments, the ash outlet may comprise a cooling zone, more specifically the cooling zone may be disposed surrounding at least part of the removable high surface area body, and/or the cooling zone may be disposed between an inlet of the ash collection chamber and the channel, and/or the cooling zone may be disposed between the ash collection chamber and the gas outlet.

In some embodiments, the cooling zone may comprise the cooling means.

In some embodiments, the cooling means may be configured to cool at least 70 wt.-%, more specifically at least 80 wt.-% and in particular at least 90 wt.-% of the volatilized ash to a temperature below the respective solidification/condensation temperatures.

In some embodiments, the cooling means may be configured to cool the volatile/gas stream to temperatures below 2000 °C, more specifically to below 1800°C, even more specifically to below 1700°C and in particular to below 1500°C.

In some embodiments, the ash outlet may comprise the cooling means, more specifically wherein the cooling means may be provided closer to the gas inlet than the high surface area body.

In some embodiments, it may be particularly advantageous that the cooling means may be provided further away from the gas inlet than the high surface area body.

In some embodiments, the cooling means extends along the whole ash collection chamber.

In some embodiments, the graphitization furnace may comprise an ash collection container.

In some embodiments, the cooling means may comprise a cold trap.

In some embodiments, the channel may be surrounded by an isolation structure, wherein the ash outlet may be disposed within the isolation structure.

In some embodiments, the channel may be gas permeable, more specifically the channel may comprise gas permeable graphite, in particular the channel may comprise porous graphite with a gas permeability of at least $0{,}3$ cm$^2$/s (measured according to DIN 51935:2019-07).

In some embodiments, the isolation structure may be gas impermeable, more specifically the isolation structure may comprise gas impermeable graphite, in particular the isolation structure may comprise Gas impermeable with a gas permeability of less than $0{,}3$ cm$^2$/s (measured according to DIN 51935:2019-07).

In some embodiments, the ash outlet may comprise a means of gaseous communication between the ash outlet and the channel, in particular the means of gaseous communication may be a pipe penetrating an isolation structure which surrounds the channel.

In some embodiments, a gas permeable material may be disposed between the channel and the isolation structure, more specifically a particulate carbonaceous material and in particular pearled soot, particulate graphite, particulate coke or carbon black.

In some embodiments, the furnace may comprise a second ash collection chamber in gaseous communication with the channel comprising a second hatch and a second high surface area body removably disposed within the second ash collection chamber, and/or a second cooling means. The ash collection chamber and the second ash collection chamber may be arranged such that they may be operated in parallel operation and wherein the furnace further contains one or more valve means to control the gaseous communication of the respective ash collection chamber with the channel.

In a second aspect, the present disclosure relates to a method of using a graphitization furnace according to any preceding embodiment for preparing graphite from carbonaceous material.

## Brief Description of the Figures

**Fig. 1** shows a cross-section of a channel comprising an ash outlet comprising a high surface area body and a hatch.

**Fig. 2** shows a cross-section of a channel comprising an ash outlet comprising a cooling means and an ash collection container.

**Fig. 3** shows a cross-section of a channel comprising an ash outlet comprising a cooling rod.

## Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

The most common commercially used anode material in lithium-ion batteries is graphite. The graphite can be lithiated to the state of $LiC_6$, which correlates to a theoretical maximal capacity of 372 mAh/g.

Artificial graphite may be produced by heating carbonaceous starting materials, such as coke and/or pitch, to temperatures of about 3000 °C under exclusion of oxygen. The heating may be performed in batch or continuous furnaces. In a continuous furnace, powdery or granulated carbonaceous material may be conveyed along a heated channel between a raw material inlet and a product outlet, transitioning to graphite while being conveyed.

However, the carbonaceous starting materials may still comprise impurities. These impurities, also referred to as ash, may outgas from the carbonaceous material during the graphitization. For example, coke may comprise up to 20 wt.-% of ash. To attain a high-quality graphite from the graphitization process, the ash needs to be removed from the carbonaceous material. The impurities may evaporate at different typical temperature levels, depending on the nature of the impurities, during the process of heating the starting materials up to the maximum temperature, up to above 3000°C. Further, the ash may partly or completely condensate and/or react on cooler parts of the graphitization furnace. For example, the ash may condensate in gas outlets, e.g. flues, which may result in the gas outlets becoming clogged. The condensing ash may also react upon condensation to form e.g. carbide compounds with carbon or graphite materials in the furnace that are exposed to the ash vapor. Clogging of gas outlets may result in overpressure within the furnace, which may necessitate a shutdown of the graphitization furnace. Carbide formation may lead to destruction of affected parts of the furnace.

The ash typically comprises inorganic impurities. Under graphitization conditions, these inorganic impurities may evaporate, decompose, or react otherwise to volatile species or may be converted *in-situ* in volatile species such as carbides, elemental vapor, etc. The impurities may also be actively converted into more volatile substances by adding purge gases.

The present disclosure contemplates facilitating removal of these volatiles by creating a pressure differential in the furnace. The pressure differential is created by providing a site of preferential deposition for the volatiles outside of the primary reaction zone of furnace. The site of preferential deposition creates a pressure differential which drives the volatiles away from the site of their generation, i.e. the carbonaceous material undergoing graphitization.

It has been found that a removable high surface area body may be used as an effective means for providing a site of preferential deposition, while preventing excessive loss of thermal energy from the graphitization furnace. Additionally, it has also been found that a cooling means may be used as a further effective means for providing a site of preferential deposition and may be used to solidify gaseous ash from a gas stream, again preventing excessive loss of thermal energy from the graphitization furnace.

These measures may also be used in combination.

Furthermore, the aforementioned differential pressure-driven removal of volatiles may further be facilitated by providing a gas stream to the carbonaceous material which drives the volatiles towards the site of preferential deposition and/or by providing a vacuum which pulls the volatiles towards the site of preferential deposition.

Accordingly, in a first aspect, the present disclosure relates to a graphitization furnace comprising a raw material inlet, a product outlet and a channel 100 connecting the raw material inlet and the product outlet. The graphitization furnace further comprises an ash outlet 110 in gaseous communication with the channel 100, wherein the ash outlet 110 comprises an ash collection chamber 120. The ash collection chamber 120 comprises a hatch 160. Further, the ash collection chamber 120 comprises a high surface area body 130 removably disposed within the ash collection chamber 120. Alternatively or additionally to the hatch 160 and the high surface area body 130 the ash collection chamber 120 comprises a cooling means 140.

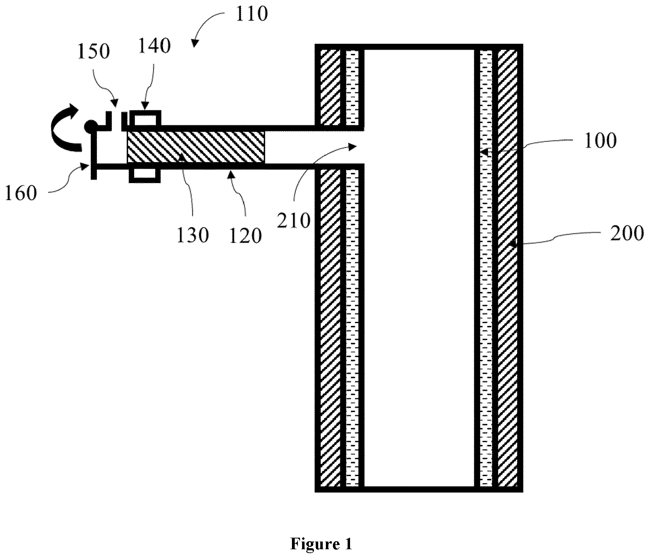

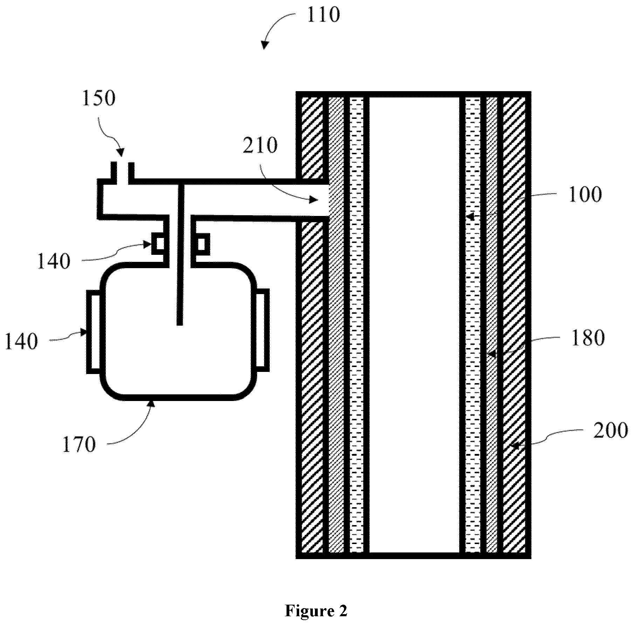

Fig. 1 shows a section of an exemplary schematic graphitization furnace according to the first aspect. In some embodiments, like the one shown in Fig. 1, the graphitization furnace is a vertical graphitization furnace. Carbonaceous material is supplied to the channel 100 via the raw material inlet and converted to graphite while passing through channel 100. Graphite is then discharged through the product outlet. The graphitization furnace further comprises an ash outlet 110. In some embodiments, like the one shown in Fig. 1, the ash outlet 110 is provided adjacent to (i.e. external to channel 100) and in gaseous communication with the channel 100. In some embodiments, e.g. ash outlet 110 and the channel 100 do not form an integral or unitary body or apparatus, the ash outlet 110 comprises a means of gaseous communication between the ash outlet 110 and the channel 100. The means of gaseous communication may be provided in the form of a pipe penetrating an isolation structure 200 which surrounds the channel 100, but other configurations (e.g. as discussed later on with respect to Fig. 2) are also possible.

The location where channel 100 is in gaseous communication with ash outlet 110 is not particularly limited and can be freely selected, e.g. depending on the temperature profile of channel 100. In some embodiments, channel 100 may comprise a channel heating zone, a channel high temperature reaction zone and a channel cooling zone. The heating zone may be characterized by the temperature of the carbonaceous material increasing in flow direction when the graphitization furnace is used. The channel high temperature reaction zone may be characterized by the carbonaceous material having a temperature of at least 80% of the maximum temperature achieved in the graphitization furnace. The channel cooling zone may be characterized by the temperature of the carbonaceous material decreasing in flow direction when the graphitization furnace is used. It may be particularly advantageous that the ash outlet 110 is in gaseous communication with the channel high temperature reaction zone of channel 100 since this may help in minimizing the undesirable deposition of ash in other parts of the furnace.

As mentioned above, the removal of volatiles may further be facilitated by providing a gas stream to the carbonaceous material which drives the volatiles towards the site of preferential deposition, i.e. ash outlet 110. Accordingly, in some embodiments, the graphitization furnace comprises at least one gas injection port (not shown in Fig. 1). The gas injection port may be configured to dispense inert gases (such as helium or argon) and/or purge gases (such as a gas comprising halogens). It may be particularly advantageous that the gas injection port is located closer to the product outlet than the opening where the ash outlet 110 is in gaseous communication with the channel 100. In such a spatial arrangement, the inert gases or purge gases injected into channel 100 may facilitate driving the volatiles towards ash outlet 110 and away from the product outlet, to provide a purer product with a lower consumption of gas. It may also be particularly advantageous that the gas injection port is located at about the same or at about substantially the same level (relative to the raw material inlet and the product outlet) as the opening where ash outlet 110 is in gaseous communication with the channel 100. Advantageously, it is also provided on the opposite side of channel 100. However, this is not strictly necessary, in particular if a plurality of gas injection ports is used which are arranged circumferentially around channel 100. Providing the gas injection port(s) on (about) the same level as the opening where ash outlet 110 is in gaseous communication with the channel 100 may help in minimizing the travel distance of the gasses in channel 100 and, thus, maximize their effect in carrying the volatilized ashes towards the ash outlet 110. Thus, energy losses may be reduced due to the reduced amount of purge or inert gases required. In some embodiments, the channel 100 may be provided with at least one gas injection port connected to a purge gas pump and/or pressure regulator, in particular wherein the purge gas pump and/or pressure regulator is/are configured to maintain a pressure above the ambient pressure in the graphitization furnace. In some embodiments, the at least one gas injection port is further connected to a heat exchanger configured to preheat the injected gas. From a standpoint of energy efficiency, it may be particularly advantageous that the heat exchanger is configured to draw heat from gas having left channel 100 towards ash outlet 110 or to draw heat from the channel cooling zone of channel 100.

In some embodiments, the graphitization furnace may be a continuous graphitization furnace, in particular a vertical continuous graphitization furnace. The provision of an ash outlet 110 in a continuous graphitization furnace may be particularly advantageous, as it may allow for continued removal of ash from the graphitization furnace, which may otherwise require frequent shutdowns of the oven to remove the ash to prevent safety hazards.

Next, the ash outlet 110 will be described in more detail:
The portion of the ash outlet 110 connecting it to the channel 100 may be referred to as a gas inlet 210. In some embodiments, the gas inlet 210 may be configured to allow gas from the channel 100 to enter into the ash outlet 110. In some embodiments, the gas inlet 210 may be disposed at an upstream end of the ash outlet 110 and/or the gas outlet 150 may be disposed at a downstream end of the ash outlet. The terms upstream and downstream refer to the direction of gas flow within the ash outlet 110. In some embodiments, such as the one shown in Fig. 1, the ash outlet 110 comprises an ash collection chamber 120 and a high surface area body 130 removably disposed therein. The high surface area body 130 may - due to its large surface area - act as a site of preferential deposition even in the absence of a distinct cooling means, however, it may be particularly advantageous to operate the high surface area body 130 in combination with a cooling means as described in more detail below.

In some embodiments, the ash collection chamber 120 may be a section of a tube of the ash outlet 110, wherein the ash is configured to solidify. The ash collection chamber 120 may also be a section with a differing diameter or separate structure wherethrough the gas stream is directed. Further, in some embodiments, the ash outlet 110 may comprise a gas outlet 150 which may be used to process remaining gasses further downstream. The high surface area body 130 may be placed between the gas inlet 210 and the gas outlet 150 such that the ash from the gas stream may solidify on the high surface area body 130, before the gas stream escapes through the gas outlet 150.

Further, the ash collection chamber 120 comprises a hatch 160. The hatch 160 may be opened to remove or replace the high surface area body 130. The specific form of the hatch is not particularly limited as long as it allows access to the high surface area body 130. It can be as simple as a hatch door or more elaborate such as an inert gas lock.

In some embodiments, the high surface area body 130 may be a non-woven material such as a felt, more specifically a carbonaceous felt, in particular a graphite felt or a carbon felt. Graphite felts and carbon felts may have a high surface area. Additionally, graphite felts and carbon felts may exhibit a low thermal conductivity and high thermal resistance. Graphite felts may exhibit improved mechanical properties compared to non-graphite felts, which may ensure structural integrity of the felt when removing it from the ash collection chamber 120. However, carbon felts may be cheaper and exhibit a lower thermal conductivity compared to graphite felts. Additionally, carbon felts may be graphitized while collecting the ash. As graphite felts and carbon felts exhibit high chemical resistance, they may be reused after (chemically and/or physically) removing the ash.

In some embodiments, the high surface area body may comprise or consist of a particulate carbonaceous material, more specifically particulate graphite, particulate coke, pearled soot. In some embodiments, the high surface are body may comprise or consist of carbon black.

In some embodiments, the high surface area body 130 may be a body comprising a plurality of lamella or rips, in particular a plurality of lamella or rips which form a tortuous path for the gas stream. In some embodiments, the high surface area body 130 and the cooling means 140 may be the same structure, in particular the high surface area body 130 may be a first side of a heat exchanger and the cooling means 140 may be a second side of a heat exchanger, wherein the heat exchanger is disposed removably within the ash outlet 110.

In some embodiments, the high surface area body 130 (which may be a felt and/or a particulate carbonaceous material) may at least be partially encased in a cartridge. The high surface area body (130), in particular a felt and/or a particulate carbonaceous material, may be mechanically stabilized within a cartridge and, thus, more convenient to remove and clean. The cartridge may also keep pearled soot or carbon black or particulate carbonaceous material in place.

In some embodiments, the ash outlet may comprise a cooling zone, more specifically the cooling zone may be disposed surrounding at least part of the removable high surface area body, and/or the cooling zone may be disposed between the inlet of the ash collection chamber 120 and the gas inlet 210 of the ash outlet 110 and/or wherein the cooling zone is disposed between the ash collection chamber 120 and the gas outlet 150. The cooling zone may be cooled by ambient air. The cooling zone may aid in condensation/precipitation of the volatilized ash. In some embodiments the cooling zone may comprise the cooling means 140. The cooling means 140 may be configured to allow heat dissipation to the environment or may be configured to cool the gas steam (or parts thereof) to a temperature below the solidification/condensation temperature of a substantial amount of the ash by transferring the heat into a circulating cooling medium such as water or a second gas stream (in e.g. a cross-flow heat exchanger). The cooling means 140 may comprise passive cooling means, for example surface enlargements such as air fins. Alternatively or additionally, the cooling means 140 may comprise active means, for example air cooling or liquid cooling, in particular water cooling. The inlet of the ash collection chamber 120 is not necessarily a defined structure but may be for example the part of the ash collection chamber 120 closest to the channel 100, where the volatilized ash starts to condensate/precipitate or the part of the high surface area 130 closest to the channel 100.

In some embodiments, the high surface area body 130 may have thermal conductivity between about 0.01 Wm/K to about 0.4 Wm/K measured at room temperature. In some embodiments, the high surface area body 130 may have thermal conductivity of less than 1.0 $Wm^{-1}K^{-1}$ at 2000 °C. A low thermal conductivity may further reduce the loss of thermal energy from the graphitization furnace, in particular the channel 100. While thermal energy is inevitably removed from the channel 100 by the volatile/gas stream leaving the channel 100, a high surface area body 130 exhibiting a low thermal conductivity may in particular beneficial in reducing the thermal energy loss due to conduction and thermal radiation.

In some embodiments, the furnace may (alternatively or additionally) comprise a cooling means 140. The cooling means 140 may be a cooling sleeve arranged at least partially around the ash collection chamber 120. An example is shown in Fig. 1 (in conjunction with a high surface area body 130). It should be noted that the term cooling means 140 may refer to any furnace component which is configured to cool the gas steam (or parts thereof) to a temperature below the solidification/condensation temperature of a substantial amount of the ash.

In some embodiments, it may be advantageous that cooling means 140 is configured to cool at least 70 wt.-%, more specifically at least 80 wt.-% and in particular at least 90 wt.-% of the volatilized ash to a temperature below the respective solidification/condensation temperatures. In some embodiments, it may be advantageous that cooling means 140 is configured to cool the volatile/gas stream to temperatures below 2000 °C, more specifically to below 1800°C, even more specifically to below 1700°C and in particular to below 1500°C. The aforementioned temperatures may lead to the condensation/precipitation of at least 70 wt.-%, more specifically at least 80 wt.-% and in particular at least 90 wt.-% of the volatilized ash. The aforementioned temperatures may allow sufficient removal of volatilized ash to protect furnace parts in downstream direction of the ash collection chamber 120. As a result, the aforementioned temperatures may allow continued operation, in particular in a continuous graphitization furnace. The remaining volatilized ash may be for example removed further downstream of the gas outlet 150, e.g. by gas scrubbing.

In some embodiments, the ash outlet 110 comprises the cooling means 140 provided closer to the gas inlet 210 than the high surface area body 130. This may be helpful in cooling the volatiles such that their deposition on the high surface area body 130 is improved. For the same reasons, the cooling means 140 may (additionally or alternatively) at least partially surround the ash collection chamber 120, in particular to cool the gases while they are flowing through the high surface area body.

In some embodiments, it may be particularly advantageous, that the cooling means 140 is provided further away from the gas inlet 210 than the high surface area body 130. The ash may condensate/precipitate on the high surface area body 130 without the aid of a cooling means. For example, the ash collection chamber 120 may be arranged sufficiently far away from the channel 100 to have a temperature below the condensation temperature of the substantial parts of the ash, e.g. lower than the condensation temperature of at least 70 wt.-% of the volatilized ash. The cooling means 140 arranged further away from the gas inlet 210 than the high surface area body 130 may aid in removing the remaining ash compounds with a low evaporation temperature from the gas stream.

Further, in some embodiments, the cooling means 140 extends along the whole ash collection chamber 120. The cooling means 140 may be configured to provide a gradually decreasing temperature profile between the gas inlet 210 and gas outlet 150. A gradually decreasing temperature profile may be useful to prevent clogging of the high surface area body 130. In case of a sudden shift in temperature along the ash collection chamber, a major part of the ash may solidify on the surface of the high surface area body 130 at once. In case of a gradual shift of temperature, first, ash compounds exhibiting the highest evaporation temperatures may solidify on the high surface area body 130 in sections closer to the gas inlet 210, followed by ash compounds with a lower evaporation temperature in sections closer to the gas outlet 150.

In some embodiments, the graphitization furnace may also be operated with an ash collection container 170, as depicted in Fig. 2. Fig. 2 shows a section of an exemplary schematic graphitization furnace according to the first aspect comprising an ash collection container 170. The ash collection container 170 may be disposed between the gas inlet 210 and the gas outlet 150. The cooling means 140, e.g. a cooling sleeve as depicted in Fig. 2, may be disposed around the ash collection container 170. Additionally or alternatively, the cooling means 140 may be disposed at an ash collection container 170 inlet and/or ash collection container 170 outlet. The ash may therefore solidify and accumulate in the ash collection container 170. The ash collection container 170 may be removable to remove the ash therefrom. The gas stream may be forced to enter the ash collection container 170, e.g. through a downpipe or a baffle, before leaving towards the gas outlet 150.

In some embodiments, the ash collection container 170 may comprise a particulate carbonaceous materials, more specifically particulate graphite or particulate coke. The particulate carbonaceous material may provide a precipitation surface for the ash and may be exchanged to remove the ash from the ash collection container 170.

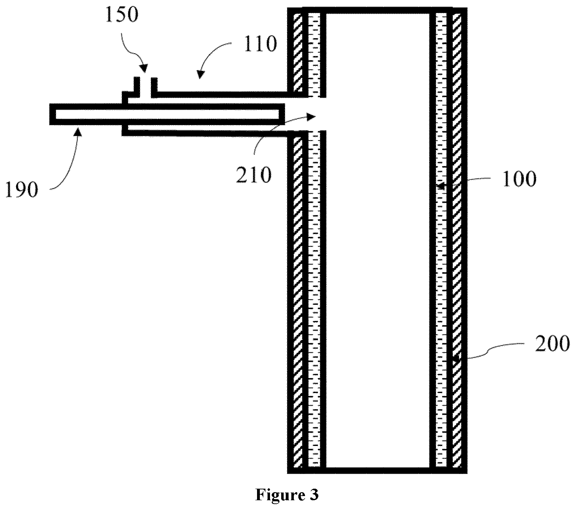

In some embodiments, the cooling means may comprise a cold trap. The cold trap may be removably disposed within the ash collection chamber 120 or ash outlet 110. Fig. 3 shows a section of an exemplary schematic graphitization furnace according to the first aspect comprising a cold trap. As depicted in Fig. 3, the cold trap may be for example a cooling rod 190. The cooling rod 190 may comprise or consist of graphite. Graphite may exhibit a high thermal resistance. Further, depending on the grade, graphite may exhibit a high thermal conductivity. The cold trap, e.g. the cooling rod 190, may be removed from the ash collection chamber 120 or ash outlet 110 to remove the ash from its surface. Removal of the ash form the surface may be performed for example by mechanical methods, e.g. milling the ash from the rod, or by chemical methods.

In some embodiments, and as depicted in e.g. Fig. 1, the channel 100 is surrounded by the isolation structure 200 and the ash outlet 110 may be disposed within the isolation structure 200. As depicted in Fig. 2, the ash outlet 110 may not be directly connected to the channel 100, instead a gap 180 may be disposed between the isolation structure 200 and the channel 100. The gap 180 may also comprise additional components. In some embodiments, a gas permeable material may be disposed between the channel 100 and the isolation structure 200, more specifically a particulate carbonaceous material and in particular pearled soot, particulate graphite, particulate coke; or carbon black. The pearled soot or carbon black may aid in thermally isolating the channel 100. The isolation structure 200 may comprise an isolation material. Additionally or alternatively, the isolation structure 200 may have a small interface with channel 100 and/or gas permeable material. Due to the small interface the rate of heat conduction from the channel 100 and/or gas permeable material to the isolation structure 200 may be low.

In some embodiments, the channel is gas permeable, more specifically the channel may comprise gas permeable graphite.

In some embodiments, the isolation structure may be gas impermeable, more specifically the isolation structure may comprise gas impermeable graphite.

In these and other instances, the reference to a gas permeable structure or material may in particular refer to a structure or material having a gas permeability of at least 0.3 $cm^2$/s measured according to DIN 51935:2019-07. In these and other instances, the reference to a gas-impermeable structure or material may in particular refer to a structure or material having a gas permeability of less than 0.3 $cm^2$/s measured according to DIN 51935:2019-07. Suitable structures or materials having the required gas-(im)permeability are well-known to the skilled person. For instance, Sigrafine HLR, HLM and HLS grades may be used as gas permeable material, and Sigrafine HLX and isostatic graphite grades may be used as gas-impermeable material. All of these grades are available from SGL Carbon GmbH, Germany.

The gas may therefore leave the channel 100 through the gas permeable graphite into the gap 180 and subsequently enter the ash outlet 110.

In some embodiments, the graphitization furnace comprises a second ash collection chamber in gaseous communication with the channel 100. The second ash collection chamber may comprise a second hatch and a second high surface area body removably disposed within the second ash collection chamber 120. As a result, the gas stream can be continuously removed from the graphitization furnace, for example, while the high surface area body 130 or high surface area body are exchanged or cleaned. Additionally or alternatively, the second ash collection chamber may comprise a second cooling means. The ash collection chamber 120 and the second ash collection chamber may be arranged such that they may be operated in parallel operation. The furnace may further contain one or more valve means to control the gaseous communication of the respective ash collection chamber 120 with the channel 100. As a result, the gas stream can be continuously removed from the graphitization furnace, for example, while the ash collection chamber 120 or second ash collection chamber are exchanged or cleaned.

In a second aspect, the present disclosure relates to a method of using a graphitization furnace according to any preceding embodiment for preparing graphite from a carbonaceous raw material.

In some embodiments, the method may yield graphite having a graphitization degree of at least about 46 %, more specifically 69 %, even more specifically at least about 80 % and in particular at least about 83 %.

The crystallinity of a graphite may be described via its graphitization degree which may be measured by X-ray diffraction (XRD). The crystalline carbon in the graphite forms a plurality of honeycomb lattices. The distance between the plurality of honeycomb lattices is described by the parameter "interplane distance $d_{002}$. XRD may be used to measure the interplane distance $d_{001}$ between the plurality of lattices. An interplane distance $d_{002}$ of 0.3440 nm corresponds to the interplane distance of turbostratic graphite and an interplane distance of 0.3354 nm corresponds to the interplane distance in a perfect graphite crystal.

The interplane distance may be used to calculate the graphitization degree by the following formula:

$$Graphitization\ Degree = \frac{0.3440nm - d_{002}}{0.3440nm - 0.3354nm}$$

A higher graphitization degree may correspond to a higher maximum discharge capacity.

In some embodiments, the method may yield graphite, which is suitable for use as anode material, in particular anode material for lithium batteries.

In some embodiments, the method further comprises the step of manufacturing an anode for lithium batteries using the graphite yielded from (continuously) operating the graphitization furnace.

Although the present invention is defined in the attached claims, it should be understood that the present invention can also (alternatively) be defined in accordance with the following embodiments:

1. A graphitization furnace comprising:

a raw material inlet; a product outlet;
a channel (100) connecting the raw material inlet and the product outlet;
and an ash outlet (110) in gaseous communication with the channel (100), wherein the ash outlet (110) comprises an ash collection chamber (120) comprising

a) a hatch (160) and a high surface area body (130) removably disposed within the ash collection chamber (120), and/or
b) a cooling means (140).

2. The graphitization furnace according to aspect 1, wherein the graphitization furnace is a continuous graphitization furnace, in particular a vertical continuous graphitization furnace.

3. The graphitization furnace according to any preceding aspect, wherein the ash outlet (110) is provided adjacent to and in gaseous communication with the channel (100).

4. The graphitization furnace according to any preceding aspect, wherein the channel (100) comprises a channel heating zone, a channel high temperature reaction zone and a channel cooling zone, wherein the ash outlet (110) is in gaseous communication with the channel high temperature reaction zone.

5. The graphitization furnace according to any preceding aspect, wherein the graphitization furnace comprises at least one gas injection port.

6. The graphitization furnace according to any preceding aspect, wherein the channel (100) is provided with at least one gas injection port which is connected to a purge gas pump and/or pressure regulator, in particular wherein the purge gas pump and/or pressure regulator is/are configured to maintain a pressure above the ambient pressure in the graphitization furnace.

7. The graphitization furnace according to aspect 5 or 6, wherein the at least one gas injection port is connected to a heat exchanger configured to preheat the injected gas.

8. The graphitization furnace according to any preceding aspect, wherein the ash outlet (110) comprises a gas outlet (150) and gas inlet (210), in particular wherein the gas inlet (210) is configured to allow gas from the channel (100) to enter the ash outlet (110).

9. The graphitization furnace according to aspect 8, wherein the gas inlet (210) is disposed at an upstream end of the ash outlet (210) and/or the gas outlet (150) is disposed at a downstream end of the ash outlet (210).

10. The graphitization furnace according to any preceding aspect, wherein the high surface area body (130) is a felt, more specifically, wherein the high surface area body (130) is a carbon felt or graphite felt, in particular a graphite felt; or wherein, the high surface area body comprises or consists of a particulate carbonaceous material, more specifically particulate graphite, particulate coke, pearled soot; or wherein the high surface are body comprises or consists of carbon black..

11. The graphitization furnace according to any preceding aspect, wherein the high surface area body (130) is at least partially encased in a cartridge.

12. The graphitization furnace according to any preceding aspect, wherein the ash outlet (110) comprises a cooling zone, more specifically wherein the cooling zone is disposed surrounding at least part of the removable high surface area body (130), and/or wherein the cooling zone is disposed between an inlet of the ash collection chamber (120) and the channel (100) and/or wherein the cooling zone is disposed between the ash collection chamber (120) and the gas outlet (150).

13. The graphitization furnace according to aspect 12, wherein the cooling zone comprises the cooling means (140).

14. The graphitization furnace according to any preceding aspect, wherein the cooling means (140) is configured to cool at least 70 wt.-%, more specifically at least 80 wt.-% and in particular at least 90 wt.-% of the volatilized ash to a temperature below the respective solidification/condensation temperatures.

15. The graphitization furnace according to any preceding aspect, wherein the cooling means (140) is configured to cool the volatile/gas stream to temperatures below 2000 °C, more specifically to below 1800°C, even more specifically to below 1700°C and in particular to below 1500°C.

16. The graphitization furnace according to any preceding aspect, wherein the ash outlet (110) comprises the cooling means (140), more specifically wherein the cooling means (140) is provided closer to the gas inlet (210) than the high surface area body (130).

17. The graphitization furnace according to any preceding aspect, wherein the cooling means (140) is provided further away from the gas inlet (210) than the high surface area body (130).

18. The graphitization furnace according to any preceding aspect, wherein the cooling means (140) extends along the whole ash collection chamber (120).

19. The graphitization furnace according to any preceding aspect, wherein the graphitization furnace comprises an ash collection container (170).

20. The graphitization furnace according to any preceding aspect, wherein the cooling means may comprise a cold trap, in particular a cooling rod (190).

21. The graphitization furnace according to any preceding aspect, wherein the channel (100) is surrounded by an isolation structure (200) and wherein the ash outlet (110) is disposed within the isolation structure (200).

22. The graphitization furnace according to any preceding aspect, wherein the channel (100) is gas permeable, more specifically wherein the channel (100) comprises gas permeable graphite, and in particular wherein the channel (100) comprises porous graphite with a gas permeability of at least 0,3 cm$^2$/s (measured according to DIN 51935:2019-07).

23. The graphitization furnace according to any preceding aspect, wherein the isolation structure (200) is gas impermeable, more specifically wherein the isolation structure (200) comprises gas impermeable graphite, in particular wherein the isolation structure comprises gas impermeable with a gas permeability of less than 0,3 cm$^2$/s (measured according to DIN 51935:2019-07).

24. The graphitization furnace according to any preceding aspect, wherein the ash outlet (110) comprises a means of gaseous communication between the ash outlet (110) and the channel (100), in particular wherein the means of gaseous communication is a pipe penetrating an isolation structure (200) which surrounds the channel (100).

25. The graphitization furnace according to aspect 21, wherein a gas permeable material is disposed between the channel (100) and the isolation structure (200), more specifically a particulate carbonaceous material, and in particular pearled soot, particulate graphite, particulate coke; or carbon black.

26. The graphitization furnace according to any preceding aspect, wherein the furnace comprises a second ash collection chamber (120) in gaseous communication with the channel (100) comprising

a second hatch (160) and a second high surface area body (130) removably disposed within the second ash collection chamber (120), and/or
a second cooling means (140);
wherein the ash collection chamber (120) and the second ash collection chamber (120) are arranged such that they may be operated in parallel operation and wherein the furnace further contains one or more valve means to control the gaseous communication of the respective ash collection chamber (120) with the channel (100).

**Claims**

1. A graphitization furnace comprising:

a raw material inlet; a product outlet;
a channel (100) connecting the raw material inlet and the product outlet;
and an ash outlet (110) in gaseous communication with the channel (100), wherein the ash outlet (110) comprises an ash collection chamber (120) comprising

a) a hatch (160) and a high surface area body (130) removably disposed within the ash collection chamber (120), and/or
b) a cooling means (140).

2. The graphitization furnace according to claim 1, wherein the graphitization furnace is a continuous graphitization furnace, in particular a vertical continuous graphitization furnace.

3. The graphitization furnace according to any preceding claim, wherein the ash outlet (110) is provided adjacent to and in gaseous communication with the channel (100).

4. The graphitization furnace according to any preceding claim, wherein the channel (100) comprises a channel heating zone, a channel high temperature reaction zone and a channel cooling zone, and wherein the ash outlet (110) is in gaseous communication with the channel high temperature reaction zone.

5. The graphitization furnace according to any preceding claim, wherein the channel (100) is provided with at least one gas injection port which is connected to a purge gas pump and/or pressure regulator, in particular wherein the purge gas pump and/or pressure regulator is/are configured to maintain a pressure above the ambient pressure in the graphitization furnace.

6. The graphitization furnace according to any preceding claim, wherein the ash outlet (110) comprises a gas outlet (150) and gas inlet (210), in particular wherein the gas inlet (210) is configured to allow gas from the channel (100) to enter the ash outlet (110), more specifically wherein the gas inlet (210) is disposed at an upstream end of the ash outlet (210) and/or the gas outlet (150) is disposed at a downstream end of the ash outlet (210).

7. The graphitization furnace according to any preceding claim, wherein the high surface area body (130) is a felt, more specifically wherein the high surface area body (130) is a carbon felt or graphite felt, in particular a graphite felt.

8. The graphitization furnace according to any preceding claim, wherein the ash outlet (110) comprises a cooling zone, more specifically wherein the cooling zone is disposed surrounding at least part of the removable high surface area body (130), and/or wherein the cooling zone is disposed between an inlet of the ash collection chamber (120) and the channel (100) and/or wherein the cooling zone is disposed between the ash collection chamber (120) and the gas outlet (150).

9. The graphitization furnace according to claim 8, wherein the cooling zone comprises the cooling means (140), wherein the cooling means (140) is configured to cool the volatile/gas stream to temperatures below 2000 °C, more specifically to below 1800°C, even more specifically to below 1700°C and in particular to below 1500°C.

10. The graphitization furnace according to any preceding claim, wherein the cooling means (140) is provided further away from the gas inlet (210) than the high surface area body (130), or extends along the whole ash collection chamber (120).

11. The graphitization furnace according to any preceding claim, wherein the cooling means may comprise a cold trap, in particular a cooling rod (190).

12. The graphitization furnace according to any preceding claim, wherein the channel (100) is gas permeable, more specifically wherein the channel (100) comprises gas permeable graphite, and in particular wherein the channel (100) comprises porous graphite with a gas permeability of at least 0,3 cm$^2$/s (measured according to DIN 51935:2019-07).

13. The graphitization furnace according to any preceding claim, wherein the isolation structure (200) is gas impermeable, more specifically wherein the isolation structure (200) comprises gas impermeable graphite, in particular wherein the isolation structure comprises gas impermeable with a gas permeability of less than 0,3 cm$^2$/s (measured according to DIN 51935:2019-07).

14. The graphitization furnace according to any preceding claim, wherein the ash outlet (110) comprises a means of gaseous communication between the ash outlet (110) and the channel (100), in particular wherein the means of gaseous communication is a pipe penetrating an isolation structure (200) which surrounds the channel (100).

15. The graphitization furnace according to any preceding claim, wherein the furnace comprises a second ash collection chamber (120) in gaseous communication with the channel (100) comprising

    a second hatch (160) and a second high surface area body (130) removably disposed within the second ash collection chamber (120), and/or
    a second cooling means (140);
    wherein the ash collection chamber (120) and the second ash collection chamber (120) are arranged such that they may be operated in parallel operation and wherein the furnace further contains one or more valve means to control the gaseous communication of the respective ash collection chamber (120) with the channel (100).

Figure 1

**Figure 2**

Figure 3

Europäisches
Patentamt

European
Patent Office

Office européen
des brevets

# EUROPEAN SEARCH REPORT

Application Number

EP 23 17 0110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 105 132 A (SICHUAN JINHUI NEW MAT CO LTD) 1 March 2022 (2022-03-01) | 1-6,8-15 | INV. C01B32/05 C01B32/205 C04B11/028 C10B3/00 F27B1/10 |
| Y | * paragraphs [0016] – [0044]; figures 1-4 * | 7 | |
| | * the whole document * | | |
| | ----- | | |
| X | CN 113 587 643 A (NINGXIA QINGBO ENVIRONMENTAL PROTECTION TECH CO LTD) 2 November 2021 (2021-11-02) | 1-6,8, 12-14 | |
| A | * paragraphs [0016] – [0027]; figures 1-3 * | 7,9-11, 15 | |
| | * the whole document * | | |
| | ----- | | |
| Y | WO 2015/046200 A1 (TAIHEIYO CEMENT CORP [JP]) 2 April 2015 (2015-04-02) | 7 | |
| A | * paragraphs [0076] – [0094]; figure 5 * | 1-6,8-15 | |
| | * the whole document * | | |
| | ----- | | |

TECHNICAL FIELDS
SEARCHED      (IPC)

C01B
C10H
F27D
C04B
C10B
F27B

The present search report has been drawn up for all claims

| Place of search | Date of completion of the search | Examiner |
|---|---|---|
| The Hague | 23 October 2023 | Follens, Lana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

      ..................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 17 0110

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2023

| Patent document cited in search report | | Publication date | Patent family member(s) | | Publication date |
|---|---|---|---|---|---|
| CN 114105132 | A | 01-03-2022 | CN | 114105132 A | 01-03-2022 |
| | | | CN | 114608308 A | 10-06-2022 |
| CN 113587643 | A | 02-11-2021 | NONE | | |
| WO 2015046200 | A1 | 02-04-2015 | CN | 106132896 A | 16-11-2016 |
| | | | JP | 6344867 B2 | 20-06-2018 |
| | | | JP | WO2015046200 A1 | 09-03-2017 |
| | | | KR | 20160060684 A | 30-05-2016 |
| | | | TW | 201529265 A | 01-08-2015 |
| | | | WO | 2015046200 A1 | 02-04-2015 |

EPO FORM P0459

For more details about this annex : see Official Journal of the European Patent Office, No. 12/82